# EUROPEAN PATENT APPLICATION

(11) **EP 4 693 917 A1**
(43) Date of publication of application: **11.02.2026**
(21) Application number: 24193399.3
(22) Date of filing: 07.08.2024
(51) Int. Cl.: H04B 5/26, H01Q 7/00, H04B 5/43, H01Q 1/24

(54) **NFC ANTENNA ASSEMBLY**

(71) Applicant: STMicroelectronics International N.V., 1228 Plan-les-Ouates, Geneva (CH)
(72) Inventor: CHLESTIL, Christoph, 8111 Gratwein Straßengel (AT); RAMPETSREITER, Martin, 8054 Graz (AT)
(74) Representative: Cabinet Beaumont

(57) **Abstract**

The present disclosure relates to an NFC antenna assembly comprising:
an NFC signal antenna having terminals and at least one plane winding arranged in a first plane; and
a plane conductive surface:
- insulated from the antenna and being at a floating potential;
- overlaying a first region arranged outside the winding and comprising the terminals of the antenna; and
- overlaying from 7% included to 40% included of a winding inner region.

## Description

### Technical field

The present disclosure relates generally to near field communication (NFC) antenna assemblies and systems comprising such assemblies.

### Background art

NFC devices use an antenna for short distance communication. However, when the NFC devices are embedded into a system, the communication with another NFC device arranged outside the system may become challenging due to shielding effects.

### Summary of Invention

There is a need to improve antenna efficiency of NFC assemblies to be able to obtain a communication between an NFC device embedded into a system with an NFC device arranged outside this system.

One embodiment addresses all or some of the drawbacks of known NFC antenna assemblies.

One embodiment provides an NFC antenna assembly comprising:
an NFC signal antenna having terminals and at least one plane winding arranged in a first plane; and
a plane conductive surface:
   - insulated from the antenna and being at a floating potential;
   - overlaying a first region arranged outside the winding and comprising the terminals of the antenna; and
   - overlaying from 7% included to 40% included of a winding inner region.

According to an embodiment, the conductive surface is arranged in a second plane, parallel to the first plane.

According to an embodiment, the conductive surface is separated from the antenna by an insulating material.

According to an embodiment, the conductive surface is made of a material comprising a metal among copper, aluminum, gold, silver or their alloy.

According to an embodiment, the conductive surface has a rectangular shape with a length over width ratio ranging from 0,45 included and 12,6 included.

According to an embodiment, the thickness of the conductive surface is inferior or equal to 50 pm.

According to an embodiment, the conductive surface has a symmetrical axis overlaying a symmetrical axis of the antenna.

According to an embodiment, the winding of the antenna has a rectangular shape.

According to an embodiment, between 50% included and 90% included of the conductive surface is overlaying the winding inner region.

According to an embodiment, the second plane is separated from the first plane by a distance between 0,8 mm included and 2 mm included.

One embodiment provides an NFC system comprising:
- an optoelectronic display;
- an NFC antenna assembly as described above and arranged inside the system;
the antenna of the NFC antenna assembly being arranged between the conductive surface and a backside of the display.

According to an embodiment, the display comprises an LCD display having a touchscreen.

According to an embodiment, the distance between the antenna and the backside of the display is between 0 mm included to 10 mm included.

One embodiment provides a payment system comprising the NFC system as described above.

### Brief description of drawings

The foregoing features and advantages, as well as others, will be described in detail in the following description of specific embodiments given by way of illustration and not limitation with reference to the accompanying drawings, in which:
Figure 1 illustrates schematically, in forms of blocks, a cross section of an NFC system;
Figure 2 illustrates a block of Figure 1 according to an embodiment; and
Figure 3 illustrates a Smith chart.

### Description of embodiments

Like features have been designated by like references in the various figures. In particular, the structural and/or functional features that are common among the various embodiments may have the same references and may dispose identical structural, dimensional and material properties.

For the sake of clarity, only the operations and elements that are useful for an understanding of the embodiments described herein have been illustrated and described in detail.

Unless indicated otherwise, when reference is made to two elements connected together, this signifies a direct connection without any intermediate elements other than conductors, and when reference is made to two elements coupled together, this signifies that these two elements can be connected or they may be coupled via one or more other elements.

In the following disclosure, unless indicated otherwise, when reference is made to absolute positional qualifiers, such as the terms "front", "back", "top", "bottom", "left", "right", etc., or to relative positional qualifiers, such as the terms "above", "below", "higher", "lower", etc., or to qualifiers of orientation, such as "horizontal", "vertical", etc., reference is made to the orientation shown in the figures.

Unless specified otherwise, the expressions "around", "approximately", "substantially" and "in the order of" signify within 10 % or 10°, and preferably within 5 % or 5°.

Near field communication (NFC) devices use a radio frequency electromagnetic field generated by a device (e.g. terminal or reader) to communicate with another device (e.g. card, tag). One device may operate in both reader mode, by generating a field intended for another device, and in card mode, by capturing a field generated by another device. NFC allows very short distance communications (less than ten centimeters) between two devices.

In the present description, we consider the case of a system in which at least one of the devices is compatible with NFC technology according to a standard such as for example the NFC Forum, the norm ISO14443, or EMVCo.

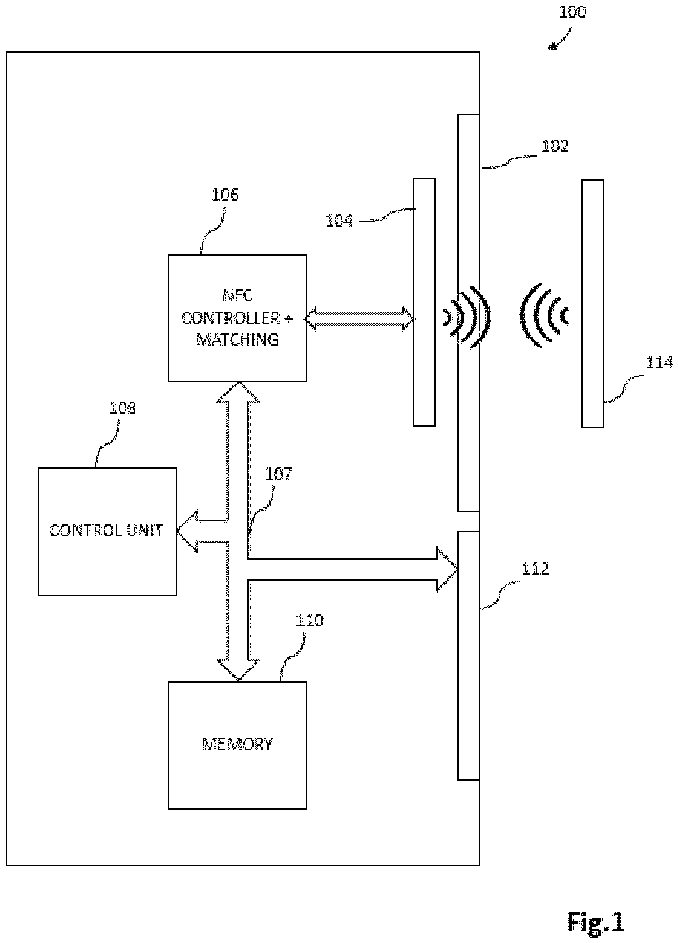

Figure 1 illustrates schematically, in forms of blocks, a cross section of an NFC system 100.

For example, the NFC system 100 may be a payment terminal, a transportation tag terminal or a smartphone.

The NFC system 100 comprises a display 102 which is arranged through, for example, a casing of the system 100, for a user to be able to watch the display screen from outside the casing.

In an example, the display 102 comprises a touchscreen. In another example, the display 102 comprises an LCD display. In this case, the display 102 may comprise a stack of a glass material, a liquid crystal layer, a conductive grid, and an insulating material such as polyimide.

The NFC system 100 may further comprise a numeric keypad 112.

In the illustrated example, an NFC antenna assembly 104 is arranged in the vicinity of a backside of the display 102 facing an internal volume of the system 100. In an example, the distance between the antenna assembly 104 and the backside of the display is between 0 mm included to 10 mm included.

The antenna assembly 104 comprises at least one antenna. The antenna comprises for example a winding with, for example, one or several loops arranged to have a current going through the same direction in each loop.

The antenna assembly 104 is for example coupled, preferably connected, to an NFC controller 106 (NFC CONTROLLER + MATCHING) comprising for example an impedance matching circuit. In an example, the matching circuit is external to the NFC controller block 106 and is coupling the antenna assembly 104 to the NFC controller 106. In an example, the NFC controller 106 is configured to power up and to exchange information with one or more external NFC tags 114 if the radio frequency signal emitted by the antenna, and going through the display, is strong enough. The NFC controller 106 may also be configured to be in the NFC reader mode and control NFC communications. In an example, the NFC controller 106 initiates the NFC communication, powers up the external NFC tag 114, and sends commands through a magnetic field via the antenna to the passive external tag 114.

In an example, the NFC controller 106 is coupled, for example via a system (data, address, and control) bus 107, to a control unit 108 (CONTROL UNIT) which is for example a microcontroller. In an example, the NFC controller 106 supports multiple radio frequency protocols and features, and for example may be used in three different modes: Read/Write, Peer to Peer (P2P), and Card Emulation.

In an example, the control unit 108 comprises one or several processing units (CPU) comprising one or a plurality of processors under control of instructions stored in an instruction memory.

The NFC controller 106 and the control unit 108 are coupled, for example via the communication bus 107, to one or several memories 110 (MEMORY), for example FLASH or MRAM or PCM (Phase Change Memory) or volatile and/or non-volatile memories. In a non-illustrated example, the memory 110 is coupled to the system bus 107 via a memory interface and via another bus. In another non-illustrated example, the system 100 further comprises an input/output interface (I/O interface) coupled to system bus 140 to communicate with the outside, for example the pad 112 and/or the display 102.

An issue with the system 100 is that the display 102 absorbs and/or reflects a major part of the signal emitted by the antenna of the antenna assembly 104. As a result, the radio frequency signal emitted by the antenna cannot reach the external tag 114 and the NFC communication between the tag 114 and the antenna is compromised.

The described embodiments propose to overcome this drawback by implementing an NFC antenna assembly which comprises:
an NFC signal antenna having terminals and at least one plane winding arranged in a first plane; and
a plane conductive surface:
   - insulated from the antenna and being at a floating potential;
   - overlaying a first region arranged outside the winding and comprising the terminals of the antenna; and
   - overlaying from 7% included to 40% included of a winding inner region.

An advantage is that the resistance of the antenna assembly is lowered and the quality factor is improved. It results in an improved strength of the radio frequency NFC signal to enable an NFC communication through the display 102.

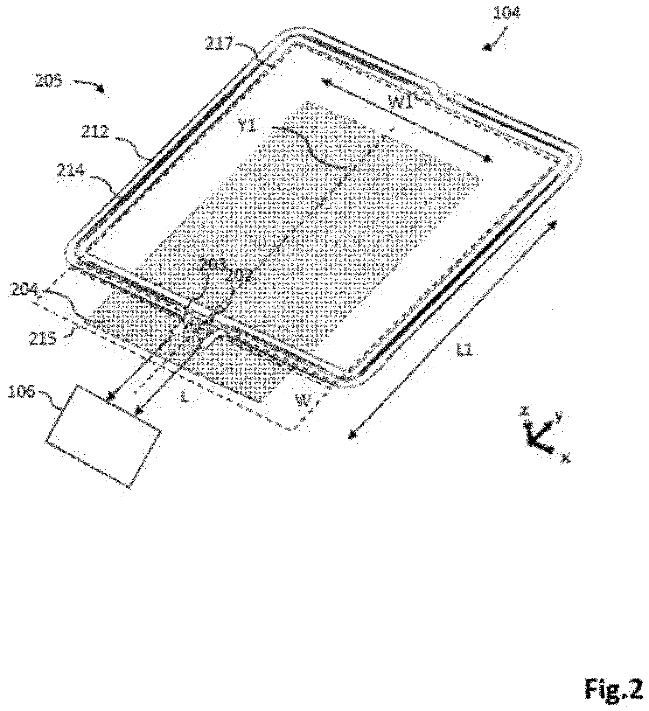

Figure 2 illustrates a block of Figure 1 according to an embodiment. More particularly, Figure 2 illustrates an example of the antenna assembly 104.

In the illustrated example, the antenna assembly 104 comprises an NFC signal antenna 205 having two terminals 202, 203 and one plane winding with two loops 212, 214. The terminals 202, 203 and loops 212, 214 are arranged in a first plane which is, is the represented example, parallel to, or the same as, a plane defined by x and y axis. The terminals 202, 203 are coupled, preferably connected, to the matching circuit of the block 106.

The antenna assembly 104 further comprises a plane conductive surface 204 which is insulated from the antenna 205.

The conductive surface 204 is configured to be arranged in such a way that the winding or antenna plane is arranged between the display 102 backside and the conductive surface 204.

The conductive surface 204 is for example overlaying all or part of a region 215 arranged outside the winding and comprising the terminals 202, 203 of the antenna 205. In other words, the region 215 has for example a rectangular shape, covering the winding terminals 202, 203, and extending outside the winding and from the outermost loop of the winding. A length L of this region 215 is for example the total length, or a part of the length, of the external edge of the outermost loop of the winding arranged on the terminals 202, 203 side. A width W of the region 215 is for example, at least, the extension of the antenna terminals 202, 203 toward the outside of the winding.

The conductive surface 204 is for example overlaying from 7% included to 40% included of a winding inner region 217. The winding inner region 217 is, in other words, the area defined by the innermost loop 214 of the winding. In other words, less than 40% of the region 217 is overlapped by the conductive surface.

In the text, the term overlaying means that the conductive surface 204 is arranged under (or above depending of the direction of observation) the regions 215 and 217 in a view along the z axis.

In an example, the conductive surface 204 is arranged in a plane parallel to the plane in which the winding and the terminals 202, 203 of the antenna extend.

In another example, the conductive surface 204 is separated from the plane, in which the winding and the terminals 202, 203 of the antenna extend, by a distance wherein the conductive surface 204 presence can influence the antenna electromagnetic behavior. In an example, this distance is between 0,8 mm included and 2 mm included. In an example, this distance corresponds to the thickness of a printed circuit board.

In an example, the winding and the terminals 202, 203 of the antenna are arranged on a first surface of a printed circuit board and the conductive surface 204 is arranged, or glued, on the opposite surface of the printed circuit board.

In an example, the conductive surface 204 is separated from the antenna by an insulating material.

In an example, between 10% included and 50% included of the conductive surface 204 is overlaying the region 215 while the rest of the conductive surface is overlaying a portion of the region 217.

Otherwise said, in an example, between 50% included and 90% included of the conductive surface 204 is overlaying the region 217, and the rest of the conductive surface 204 is overlaying a portion of the region 215.

For better results, a major part (i.e. above 50% included and below 90% included) of the conductive surface 204 is overlaying the region 217. Otherwise said, to have better results, a major part (i.e. above 50%) of the conductive surface is arranged under (or above depending of the direction of observation) the region 217.

In another example, the conductive surface 204 is insulated from the antenna, for example at least from its winding and terminals. In other words, the conductive surface 204 has no direct electrical connection with the antenna, but it is arranged to be in a wireless electromagnetic interaction with the antenna electromagnetic field. In this example, the conductive surface 204 is at a floating potential, which means that the conductive surface 204 is surrounded by insulating materials, such as for example the air, a gluing material, or a printed circuit board resin.

In operation, the conductive surface 204 will act, for example, as an electromagnetic field reflector of the electromagnetic field coming from the winding of the antenna.

In an example, the conductive surface is made of a material comprising any metal such as copper, aluminum, gold, silver or their alloy, or any conductive material such as a material comprising graphene, carbon nanotubes, or doped oxide such as indium tin oxide (ITO) or Zinc oxide (ZnO) for example. Copper has the advantage of being an unexpansive solution which can be industrialized easily.

In an example, the conductive surface 204 has a rectangular shape with a length L1 over width W1 ratio ranging from 0,45 included and 12,6 included. The shape of the conductive surface may be similar to the shape of the winding. For example, the shape of the conductive surface may be a rectangular shape in the case of a rectangular shaped winding.

In an example, the thickness of the conductive surface 204 is inferior or equal to 50 pm, for example 18 µm or 35 µm which are typical thicknesses used in printed circuit boards.

In another example, the conductive surface 204 has a symmetrical axis Y1 overlaying a symmetrical axis of the antenna. As an example, if a symmetrical axis of the winding extends in the middle of the terminals 202, 203, then a symmetrical axis of the conductive surface 204 overlaps the symmetrical axis of the winding. In other words, the conductive surface 204 and the winding are aligned parallelly along the z axis. This insures a symmetrical behavior of the antenna assembly 104.

The described conductive surface 204 allows a lowering of the antenna resistance up to 30%, an increase of the quality factor (Q factor) by about 20%, a decrease of the antenna inductance by about 6%, and a lowering of the overall matching impedance. This leads to a higher field strength.

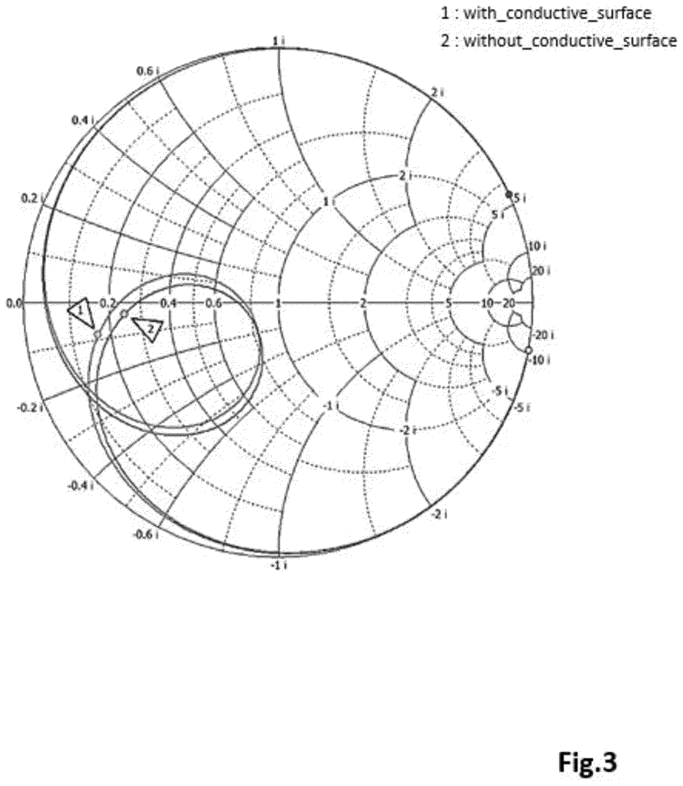

Figure 3 illustrates a Smith chart.

More particularly, Figure 3 is a Smith chart of the assembly of the display 102, the antenna having its winding placed in the display 102 backside vicinity, and optionally the conductive surface 204. In the chart, line 1 (with_conductive_surface) represents the case where the conductive surface 204 is arranged in the opposite side of the winding with respect to the display backside, and line 2 (without_conductive_surface) represents the case where the conductive surface 204 is not present. In other terms, the winding, or antenna plane, is arranged between the display backside and the conductive surface.

When using the conductive surface 204, one may observe a decrease in resistance of the antenna assembly as compared to the antenna assembly without the conductive surface 204.

Various embodiments and variants have been described. Those skilled in the art will understand that certain features of these embodiments can be combined and other variants will readily occur to those skilled in the art. In particular, the shape of the conductive surface 204 can be adapted by the person of the art as regards the shape of the region 217 as long as the conductive surface 204 does not cover more than 40% of the region 217.

Finally, the practical implementation of the embodiments and variants described herein is within the capabilities of those skilled in the art based on the functional description provided hereinabove. In particular, concerning the placement of the conductive surface 204 as regards regions 215 and 217, the person of the art can achieve different arrangements, involving a change of the proportion of the conductive surface 204 covering the region 217 for example, to obtain the best results.

## Claims

1. An NFC antenna assembly (104) comprising:
an NFC signal antenna (205) having terminals (202, 203) and at least one plane winding (212, 214) arranged in a first plane; and
a plane conductive surface (204):
- insulated from the antenna and being at a floating potential;
- overlaying a first region (215) arranged outside the winding (212, 214) and comprising the terminals (202, 203) of the antenna; and
- overlaying from 7% included to 40% included of a winding inner region (217).

2. The assembly according to claim 1, wherein the conductive surface (204) is arranged in a second plane, parallel to the first plane.

3. The assembly according to claim 1 or 2, wherein the conductive surface (204) is separated from the antenna by an insulating material.

4. The assembly according to any of claims 1 to 3, wherein the conductive surface (204) is made of a material comprising a metal among copper, aluminum, gold, silver or their alloy.

5. The assembly according to any of claims 1 to 4, wherein the conductive surface has a rectangular shape with a length (L1) over width (W1) ratio ranging from 0,45 included and 12,6 included.

6. The assembly according to any of claims 1 to 5, wherein the thickness of the conductive surface (204) is inferior or equal to 50 pm.

7. The assembly according to any of claims 1 to 6, wherein the conductive surface (204) has a symmetrical axis (Y1) overlaying a symmetrical axis of the antenna.

8. The assembly according to any of claims 1 to 7, wherein the winding of the antenna (205) has a rectangular shape.

9. The assembly according to any of claims 1 to 8, wherein between 50% included and 90% included of the conductive surface (204) is overlaying the winding inner region (217).

10. The assembly according to any of claims 1 to 9, wherein the second plane is separated from the first plane by a distance between 0,8 mm included and 2 mm included.

11. NFC system (100) comprising:
- an optoelectronic display (102);
- an NFC antenna assembly (104) according to any of the preceding claims and arranged inside the system (100); the antenna of the NFC antenna assembly being arranged between the conductive surface (204) and a backside of the display (102).

12. The NFC system according to claim 11, wherein the display (102) comprises an LCD display having a touchscreen.

13. The NFC system according to any of claims 11 or 12, wherein the distance between the antenna and the backside of the display (102) is between 0 mm included to 10 mm included.

14. A payment system comprising the NFC system (100) according to any of claims 11 to 13.
